# EUROPÄISCHE PATENTSCHRIFT

(11) **EP 1 595 628 B1**
(45) Veröffentlichungstag und Bekanntmachung des Hinweises auf die Patenterteilung: **12.12.2007**
(21) Anmeldenummer: 05016503.4
(22) Anmeldetag: 28.04.2000
(51) Int. Cl.: B23C 3/06

(54) **Werkzeug zur spanabhebenden Bearbeitung**
Tool for chip removing machining
Outil pour l'usinage avec enlèvement de copeaux

(30) Priorität: 03.05.1999 AT 78899
(43) Veröffentlichungstag der Anmeldung: 16.11.2005
(62) Teilanmeldung aus: 00890138.1
(73) Patentinhaber: Boehlerit GmbH & Co.KG., 8605 Kapfenberg (AT)
(72) Erfinder: Kirchberger, Peter, Dipl.-Ing., 3350 Haag (AT)
(74) Vertreter: Wildhack, Helmut

(56) Entgegenhaltungen:
- DE-A1- 3 924 884
- US-A- 5 349 888

## Beschreibung

Die Erfindung bezieht sich auf ein Werkzeug zur spanabhebenden Bearbeitung, welches Werkzeug im Wesentlichen scheibenförmig und um eine Achse drehbar ausgebildet und mit umfänglich angeordneten Schneidkanten, insbesondere von Schneidkörpern, versehen ist. Ein Werkzeug gemäß dem Oberbegriff von Anspruch 1 ist aus der DE 3924884 bekannt.

Bei einer Abspanung zur Erstellung von gekrümmten Oberflächen an Werkstücken kann das Werkstück, das Werkzeug oder beides relativ zueinander gesteuert bewegt werden, wobei die jeweiligen Bewegungen letztlich das Bearbeitungsverfahren kennzeichnen. Eine Bearbeitung durch Fräsen liegt nach üblicher Fachmeinung vor, wenn ein bewegtes Werkzeug mit mehreren aufeinanderfolgend in Eingriff gelangenden Schneiden spanerzeugend wirksam ist. Eine Drehbearbeitung erfolgt durch eine drehende und spanerzeugende Bewegung des Werkstückes bei Anstellung von einer oder mehreren Werkzeugschneiden.

Bearbeitete Zapfen von Werkstücken sind sowohl durch ein Drehen als auch durch ein Fäsen eines Rohlings herstellbar. Wird ein Lagerzapfen einer Kurbelwelle durch Fräsen bearbeitet, so dreht sich das Werkzeug mit einer Vielzahl von Schneiden, wobei eine langsame Drehung der Welle selbst den Vorschub begründet. Jede Schneide des Werkzeuges ist dabei abspanend wirksam, woraus sich eine große Zerspanungsleistung bzw. eine hohe Effizienz der Bearbeitung ergibt. Nachteilig jedoch ist, dass jede einzelne nacheinander in Eingriff gebrachte Schneide aufgrund des Vorschubes einen Span vom Werkstück abnimmt und dadurch dessen abgespante Oberfläche eine Riefen aufweisende Struktur erhält. Derartige Oberflächenriefen sind bedeutungslos, wenn nachfolgend beispielsweise ein Schleifen der Bearbeitungsbereiche vorgenommen wird oder wenn die Riefen, aufgrund einer geringen mechanischen Belastung dieser Bereiche des Werkstückes im praktischen Einsatz, keine Rissinitionsationsgefahr darstellen.

Wenn, wie alternativ zu einer Fräsbearbeitung, ein Abdrehen zur Erstellung der bearbeiteten Oberflächen im Zapfenbereich einer Kurbelwelle vorgenommen wird, können zwar höchste Güte derselben und geringste Maßtoleranzen erreicht werden, die Abspanungsleistung und die Wirtschaftlichkeit der Fertigung sind jedoch gering.

Maschinenbaukomponeten werden im zunehmenden Maße mechanisch höher belastet, sodass zur Vermeidung von Dauerbrüchen bei Wechselbeanspruchungen für hochbelastete Bereiche riefenfreie Oberflächenausführungen erforderlich sind. Dementsprechend werden vielfach die Übergänge der Zapfen von den Hauptlagern und den Pleuellagern einer Kurbelwelle mit riefenfreien Ausrundungen oder dergleichen Hohlkehlen gefordert, was durch eine Drehbearbeitung dieser Bereiche erreichbar ist.

Um nun bei einer Bearbeitung einer Kurbelwelle einerseits eine große Abspanungsleistung in den Zapfenzonen zu erreichen und andererseits die Oberflächengüte der Ausrundungen oder Hohlkehlen an den Zapfenübergängen zu verbessern, erfolgt jedoch vielfach ein Werkzeugwechsel. Das heißt, der aufgespannte Ring wird mit einem Fräswerkzeug verarbeitet, worauf diese ausgebracht, ein Drehwerkzeug positioniert und mit diesem die Bereiche, welche eine riefenfreie Oberfläche aufweisen müssen, mittels Drehens zumindest nachbearbeitet werden. Prinzipiell ist es auch möglich, den Rohling umzuspannen bzw. jeweils in Einzweckmaschinen zu spanen.

Ein Werkzeugwechsel sowie ein Umspannen des Werkstückes sind auch der Maßgenauigkeit werden aufwändige Operationen, die Zeit erfordern, so dass in der Bearbeitungstechnik, insbesondere für eine spanende Formgebung von Kurbelwellen, wirtschaftliche Lösungen für ein Fräsen und nachfolgend ein Drehen bestimmter Bereiche eines Werkstückes gesucht werden.

Aufgabe der vorliegenden Erfindung ist es, ein Werkzeug zu schaffen, mit welchem ein Abspanen mit großer Leistung und der Erhalt einer riefenfreien Bearbeitungsoberfläche ermöglicht wird.

Diese Aufgabe der vorliegenden Erfindung wird durch ein Werkzeug gemäß Anspruch 1 gelöst.

Die mit dem erfindungsgemäßen Werkzeug erreichten Vorteile sind im Wesentlichen darin begründet, dass mit demselben Werkzeug ein Fräsen und ein Drehen erfolgen kann, dass also bei entsprechender Planung der Bearbeitungsschritte eine effiziente Abspanung und eine hohe Oberflächengüte in kürzester Zeit erreichbar sind. Nach dem Fräsen mit hoher Abspanungsleistung wird einfach das Werkzeug in jener Position angehalten, in welcher dessen rückversetzter Teilbereich mit den Schneidkanten für eine Drehbearbeitung gegen das Werkstück weist, diese an die gegebenenfalls vorbearbeitete Oberfläche angestellt und eine Drehoperation zur Verbesserung der Oberfläche und Maßgenauigkeit durchgeführt.

Besonders hohe Spanabnahmen mit im Wesentlichen gleicher Spandicke sind vorteilhaft erreichbar, wenn, gegen die Drehrichtung des Werkzeuges gesehen, das auf ein Arbeitssegment für eine Drehbearbeitung des Werkstückes folgende Arbeitssegment für ein Fräsen, Schneiden besitzt, von denen mindestens die erste Schneidkante im Vergleich mit dem Flugkreis der letzten oder übrigen Schneidkante(n) radial rückversetzt ist.

Eine Beseitigung der Mängel von bekannten Bearbeitungsmaschinen wird bei einer Vorrichtung zur spanabhebenden Bearbeitung bestehend im Wesentlichen aus mindestens einer antreibbaren Werkstückspanneinrichtung und einer axparallel drehend, antreibbar in Richtung zum Werkstück hin- und herverschiebbaren und anstellbaren Werkzeugspanneinrichtung mit einem scheibenförmigen Werkzeug, erreicht, wenn die in der Richtung des Werkstückes bewegbare Werkzeugspanneinrichtung mit dem Werkzeug alternativ zur Drehbewegung für ein Fräsen, zum Nachführen einer Drehschneide an dem Bearbeitungsbereich um einen Winkel gesteuert, oszillierend schwenkbar bzw. dergleichen drehbar ausgebildet ist.

Vorteilhaft wird dadurch erreicht, dass das Drehwerkzeug auch bei sich exzentrisch um eine Achse drehenden Bearbeitungsflächen, wie zum Beispiel Pleuellagerflächen einer Kurbelwelle, in allen Fällen winkelgerecht, das heißt mit gleichbleibendem Span-, Frei und Anstellwinkel in Eingriff bringbar ist.

Von besonderem Vorteil für eine Drehbearbeitung einer Zylinderfläche ist es, wenn der Oszillation des Werkzeuges um die Einspannachse zum Nachführen der Drehschneide der Bearbeitungsfläche am Werkstück, eine sich auf der Schneidengeometrie ableitende Verschiebung des Oxzillationsbereiches für ein Drehräumen überlagerbar ist. Derart wird ein sogenanntes Rattern des Werkzeuges, welches leicht bei der Abnahme von breiten Spänen entsteht, vermieden und eine hohe Güte der gedrehten Oberfläche am Werkstück erreicht.

Bei einem Verfahren zur spanabhebenden Bearbeitung, insbesondere zur Erstellung von gekrümmten abgespanten Oberflächen von Teilbereichen von Werkstücken, zum Beispiel von Lagerzonen an Kurbelwellen, bei welchen das Werkstück sowie zumindest teilweise das Werkzeug gedreht und relativ zueinander bewegt werden und zumindest Teile der endbearbeiteten Oberflächenbereiche eine verbesserte Güte und/oder eine geringe Maßtoleranz aufweisen erfolgt die Bearbeitung mit einem Werkzeug in zwei Schritten, wobei als erster Bearbeitungsschritt ein Abspanen durch Fräsen durchgeführt wird, bei welchem das Werkstück sowie das Werkzeug bewegt und/oder gedreht und relativ zueinander angestellt werden, wonach in einem zweiten Bearbeitungsschritt ein weiteres Abspanen von Teilbereichen mit der Maßgabe erfolgt, dass die Drehbewegung des Werkzeuges beendet und zumindest eine Schneidkante desselben an das sich bewegenden Werkstück angestellt wird und von diesem Drehspäne abgenommen werden.

Vorteile sind im Wesentlichen darin zu sehen, dass einem hochwirtschaftlichen Bearbeiten durch Fräsen unmittelbar ein Drehen folgt, mittels welchen bei geringer Abspanung eine Oberflächengüte erreichbar ist, die hohe Sicherheit gegen die Initiation von Dauerbrüchen gewährleistet. Dauerbrüche von Bauteilen aufgrund von wechselnden Belastungen derselben gehen fast ausnahmslos von scharfen Kanten und von Oberflächenkerben aus. Aus diesem Grund werden anwendungstechnisch erforderliche Kanten von dynamisch beanspruchten Teilen gerundet oder mit Hohlkehlen ausgeführt, wobei die Oberfläche dieser Bereiche in besonderem Maße kerbfrei zu erstellen ist. Erfindungsgemäß ist es nun möglich, derartige Übergänge in wechselnd beanspruchten Teilen besonders wirtschaftlich sowie mit einer hohen Oberflächengüte, zumindest in den erforderlichen Teilbereichen, zu fertigen.

Fertigungstechnisch, jedoch auch hinsichtlich verbesserter Gebrauchseigenschaften kann es günstig sein, wenn bei einer Herstellung von Kurbelwellen die Lagerzonen jeweils im ersten Bearbeitungsschritt gefräst werden, wonach im zweiten Bearbeitungsschritt jeweils die Drehbewegung des Werkzeuges in einer vorgesehenen Position beendet und in dieser zumindest die Lagerflächen, die beiderseits der Lagerfläche angeordnten Rundungen oder Hohlkehlen der Lagerzapfen drehbearbeitet werden. Gegebenenfalls ist dazu lediglich eine Erhöhung der Werkstückdrehzahl erforderlich, so dass insgesamt vergleichsweise wesentlich geringere Stückfertigungszeiten erreichbar sind, was auch eine Erhöhung der Kapazität der Bearbeitungsmaschine mit sich bringt.

Wenn weiters, wie vorteilhaft vorgesehen sein kann, im zweiten Bearbeitungsschritt die Lagerflächen der Kurbelwelle jeweils durch zumindest eine schräggestellte Werkzeugkante mittels Drehräumens abgespant werden, wobei ein Nachdrehen des Werkzeuges in Abhängigkeit von der Kantenschräge bezogen auf die Lagerachse erfolgt, ist es möglich, zusätzlich eine verbesserte Achsparallelität der Fläche zu erhalten und eine geringere Maßtoleranz vorzusehen bzw. die Schleifzugabe an den Lagerstellen zu verkleinern.

Insbesondere im Hinblick auf einen kontiunierlichen Zerspanungsvorgang sowie ein Vermeinen eines Umspannens des Werkstückes bzw. Rohlings, was in nachteiliger Weise die Bearbeitungszeiten erhöhen und die Bearbeitungsgenauigkeit verringern kann, ist es bevorzugt, wenn bei einer Bearbeitung eines exzentrischen Teiles des drehbewegten Werkstückes, zum Beispiel einer Pleuellagerzone, einer um die Hauptlagerachse drehbewegten Kurbelwelle, das Werkzeug, wie bekannt, der Bearbeitungsfläche gesteuert nachgeführt wird, wobei im zweiten Bearbeitungsschritt in Abhängigkeit von der Amplitude der Bearbeitungsfläche und von dem Abstand der Schneidkante von der Werkzeugachse, eine oszillierende Schwenkbewegung, insbesondere ein oszillierendes Drehschwenken, des Werkzeuges in einem Winkelbereich der Nachführung überlagert wird.

Im Folgenden soll die Erfindung anhand von lediglich einen Ausführungsweg darstellenden Zeichnungen näher erläutert werden. Es zeigt schematisch
- Fig. 1: Fräsbearbeitung eines Kurbelwellenzapfens
- Fig. 2: Drehbearbeitung
- Fig. 3: Drehräumbearbeitung
- Fig. 4a: Rohling
- Fig. 4b: Fräsform
- Fig. 4c: Dreh- oder Endform
- Fig. 5: Werkzeugbewegung beim Fräsen
- Fig. 6: Werkzeugbewegung beim Drehen
- Fig. 7: Werkzeugbewegung beim Drehräumen

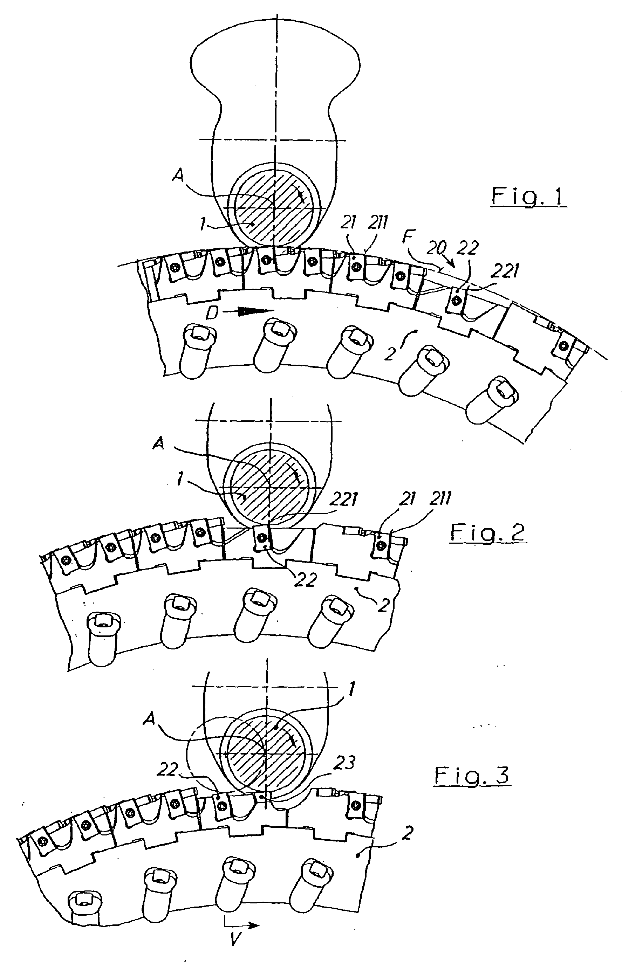

In Fig. 1 ist ein Werkstück 1, im vorliegenden ein Kurbelwellenzapfen, bei einer Fräsbearbeitung durch ein Werkzeug 2 dargestellt, wobei eine Drehrichtung D des Werkzeugs 2 derjenigen eines Werkstückes 1 gegengerichtet ist. Schneidkörper 21 mit Schneidecken 211 für ein Fräsen, die einen Flugkreis F bildend, durch eine Rotation des Werkzeuges in einer Folge bei einer Anstellung desselben abspanend wirksam sind, werden in einem Umfangsbereich durch ein Segment 20 mit einem, in dieser Position gegen die Werkzeugachse bzw. den Flugkreis F rückversetzten Schneidkörper 22 mit einer Schneidkante 221 für eine Drehbearbeitung unterbrochen. Während einer Fräsbearbeitung des Werkstückes gelangt die Schneidkante 221 nicht in Eingriffsposition.

Nach einer Spanabnahme durch ein Fräsen wird das Werkzeug 2 in einer Position, wie in Fig. 2 dargestellt, angehalten bzw. festgelegt, in welcher ein Schneidkörper 22 mit einer Schneidkante 221 für eine Drehbearbeitung des Werkstücks 1 gegenüberliegt. Durch Anstellen des nun feststehenden Werkzeuges 2 an ein sich drehendes Werkstück 1 erfolgt eine Drehbearbeitung von Oberflächenteilen.

In Fig. 3 ist eine Bearbeitung einer Zylinderfläche eines Werkstückes 1, zum Beispiel eines Zapfens einer Kurbelwelle, durch Drehräumen dargestellt. Gegenüber einem sich drehenden Werkstück wird dabei eine schräggestellte Werkzeugschneide 221 durch einen Vorschub V gegen die Werkstückdrehrichtung jeweils partiell spanbildend wirksam.

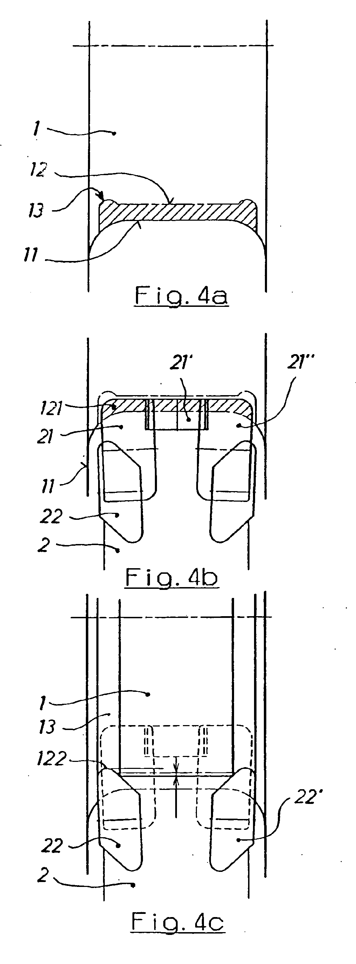

Die Fig. 4 zeigen jeweils schematisch einen Ablauf einer Abspanung.
In Fig. 4a ist ein Werkstück 1 mit einer Kontur 11 des Rohlings und einer solchen 12 des bearbeiteten Teiles dargestellt, wobei die Bearbeitungskontur 12 Hohlkehlen 13 besitzt.
Fig. 4b zeigt obiges Werkstück mit einem durch ein Fräsen mittels Fräs-Schneidkörpers 21,21',21" abgespanten Volumsbereich 121 hinsichtlich einer Rohlingsoberfläche 11. Schneidkörper 22 für eine Drehbearbeitung sind in einem Teilbereich des Werkzeugumfanges rückversetzt und nicht im Eingriff.
In Fig. 4c ist ein Werkzeug 2 derart positioniert, dass Drehkörper 22 und 22' mit Schneiden 122 Hohlkehlen 13 in einen Bearbeitungsbereich eines Werkstückes eindrehen.

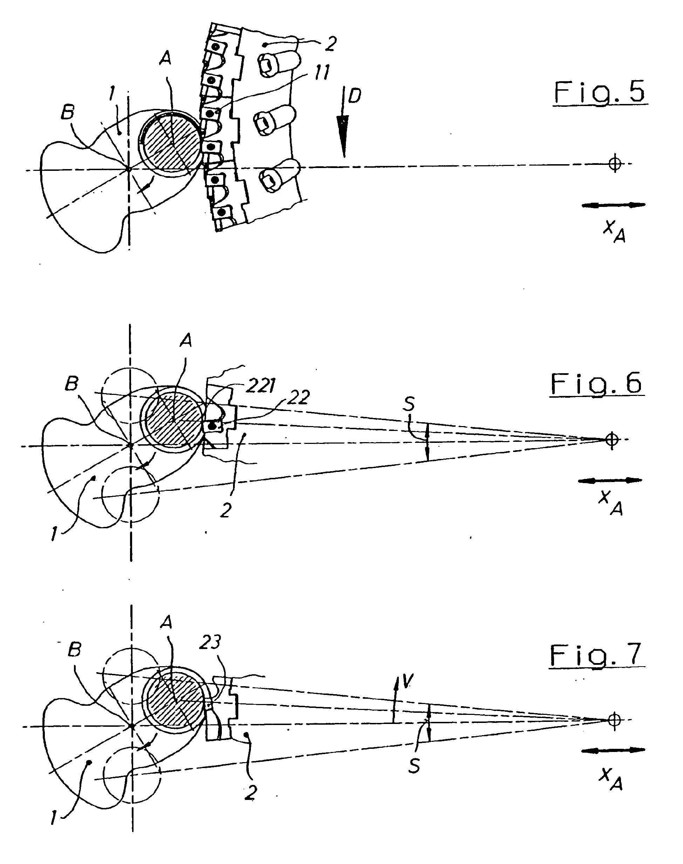

In Fig. 5 ist eine Fräsbearbeitung eines Werkstückes 1 bzw. ein hinsichtlich der Standzeit der Werkzeugschneiden vorteilhaftes Abfräsen eines Pleuelzapfens einer Kurbelwelle in Gleichlaufrichung dargestellt. Weil die Kurbelwelle derart aufgespannt ist, dass sich diese um die Hauptlagerachse B dreht, vollführt der Pleuelzapfen bzw. dessen Achse A eine exzentrische Drehbewegung der durch eine Nachführbewegung X_{A} des Werkzeuges Rechnung getragen werden muss.

Erfolg nun dem Fäsen nachgeordnet erfindungsgemäß eine Drehbearbeitung mittels eines Schneidkörpers 22, wie in Fig. 6 dargestellt, so wird zusätzlich zu einer Nachführbewegung X_{A} eine drehende Schwenkbewegung S des Werkzeuges 2 zur winkelgerichten Anstellung der Schneidkante 221 vorgenommen .

Eine Schwenkbewegung S eines Werkzeuges 2 beim Drehen eines exzentrisch aufgespannten Werkstückes 1 wird, wie in Fig. 7 dargestellt ist, bei einem Drehräumen eine Verschiebung V überlagert, die einen feinen Drehspan in Achsrichtung ohne Rattererscheinungen des Werkzeuges von der Werkstückoberfläche abnimmt.

## Patentansprüche

1. Werkzeug (2) zur spanabhebenden Bearbeitung, insbesondere zur Erstellung von gekrümmten abgespanten Oberflächen von Teilbereichen von Werkstücken (1), zum Beispiel von Lagerzonen an Kurbelwellen, welches Werkzeug (2) scheibenförmig und um eine Achse drehbar ausgebildet und mit umfänglich angeordneten Schneidkanten, insbesondere von Schneidkörpern, versehen ist, **dadurch gekennzeichnet, dass** das scheibenförmige Werkzeug (2) umfänglich zumindest zwei unabhängig voneinander einsetzbare Arbeitssegmente aufweist, wovon zumindest ein Segment mit einer für ein Fräsen vorgesehenen Vielzahl von Schneidkanten (211) oder Schneidkörpern (21), die einen Flugkreis (F) bilden und die aufeinanderfolgend in Arbeitsposition einbringbar sind, bestückt ist und zumindest ein weiteres Segment (20) mit mindestens einem gegen den Flugkreis (F) rückversetzten Schneidkörper (22) mit einer Schneidkante (221). für eine Drehbearbeitung und/oder für ein Drehräumen eines Werkstückes besitzt.

2. Werkzeug (2) nach Anspruch 1, **dadurch gekennzeichnet, dass,** gegen die Drehrichtung (D) des Werkzeuges gesehen, das auf ein Arbeitssegment für eine Drehbearbeitung des Werkstückes folgende Arbeitssegment für ein Fräsen Schneiden (211) besitzt, von denen mindestens die erste Schneidkante im Vergleich mit dem Flugkreis (F) der letzten oder übrigen Schneidkante(n) radial rückversetzt ist.

3. Verwendung eines Werkzeuges nach Anspruch 1 oder 2 in einer Vorrichtung zur Erstellung von gekrümmten abgespanten Oberflächen von Werkstücken (1), zum Beispiel von Lagerzonen an Kurbelwellen, bestehend im Wesentlichen aus mindestens einer antreibbaren Werkstückspanneinrichtung und einer axparallel drehend antreibbaren, in Richtung (A) zum Werkstück (1) hin- und herverschiebbaren und anstellbaren Werkzeugspanneinrichtung mit einem scheibenförmigen Werkzeug (2), wobei die in Richtung des Werkstückes X_{A} bewegbare Werkzeugspanneinrichtung mit dem Werkzeug (2) alternativ zur Drehbewegung (D) für ein Fräsen, zum Nachführen (S) einer Drehschneide an den Bearbeitungsbereich um einen Winkel gesteuert, oszillierend schwenkbar bzw. dergleichen drehbar ausgebildet ist.

## Claims

1. A tool (2) for metal-cutting machining, in particular for producing curved, machined surfaces of portions of workpieces (1), for example of bearing zones on crankshafts, which tool (2) is constructed in the form of a disc and so as to be rotatable about an axle and is provided with cutting edges, in particular of cutting members, arranged on the periphery, **characterized in that** on its periphery the tool (2) in the form of a disc has at least two working segments which are capable of being used independently of each other and of which at least one segment is provided with a plurality of cutting edges (211) or cutting members (21) which are provided for milling and which form a circle of rotation (**F**) and which are capable of being brought into an operative position in succession, and it has at least one further segment (20) with at least one cutting member (22) set back with respect to the circle of rotation (**F**) and with a cutting edge (221), for the rotary machining and/or for the turn-broaching of a workpiece.

2. A tool (2) according to Claim 1, **characterized in that**, as viewed in a direction opposed to the direction of rotation (**D**) of the tool, the working segment for milling following after a working segment for the rotary machining of the workpiece has cutters (211) of which at least the first cutting edge is set back radially as compared with the circle of rotation (**F**) of the last or the other cutting edge or edges.

3. Use of a tool according to Claim 1 or 2 in an apparatus for producing curved, machined surfaces of workpieces (1), for example of bearing zones on crankshafts, essentially consisting of at least one workpiece-clamping device capable of being driven and a tool-clamping device capable of being driven axially parallel in a rotating manner and displaceable and capable of being set in a reciprocating manner in the direction (**A**) with respect to the workpiece (1) and with a tool (2) in the form of a disc, wherein the tool-clamping device - movable in the direction of the workpiece **X_{A}** - with the tool (2) is designed, as an alternative to the rotational movement (**D**) for milling, so as to be pivotable in an oscillating manner and rotatable in that way for tracking (**S**) a rotary cutter on the machining area in a controlled manner about an angle.

## Revendications

1. Outil (2) d'usinage par enlèvement de copeaux, en particulier pour produire des surfaces courbes, usinées par enlèvement de copeaux, de zones partielles de pièces (1), par exemple des zones de palier sur des vilebrequins, ledit outil (2) se présentant en forme de disque et étant monté à rotation autour d'un axe et pourvu d'arêtes de coupe agencées sur sa périphérie, en particulier sur des corps de coupe, **caractérisé en ce que** l'outil en forme de disque (2) présente sur sa périphérie au moins deux segments de travail utilisables indépendamment l'un de l'autre, parmi lesquels au moins un segment est équipé, en vue d'un fraisage, d'une pluralité d'arêtes de coupe (211) ou de corps de coupe (21), formant un cercle de coupe (F), qui peuvent être amenés successivement en position d'usinage, et au moins un autre segment (20) avec au moins un corps de coupe (22) en retrait par rapport au cercle de coupe (F) avec une arête de coupe (221) pour un tournage et/ou un brochage par rotation d'une pièce.

2. Outil (2) selon la revendication 1, **caractérisé en ce que**, vu dans le sens contraire de celui du tournage de l'outil, un segment de travail suivant un segment de travail pour un tournage de la pièce, possède, en vue d'un fraisage, des arêtes de corne (211) dont au moins la première est mise en retrait radialement par rapport au cercle de coupe (F) de la dernière ou des autres arêtes de coupe.

3. Utilisation d'un outil selon l'une quelconque des revendications 1 ou 2 dans un dispositif pour produire des surfaces courbes, usinées par enlèvement de copeaux, de pièces (1), par exemple des zones de palier sur des vilebrequins, constitué essentiellement d'au moins un dispositif de serrage de pièce entraînable et d'un dispositif de serrage d'outil entraînable par rotation parallèlement à l'axe, déplaçable par un mouvement de va-et-vient en direction (A) de la pièce (1) et réglable, à l'aide d'un outil (2) en forme de disque, le dispositif de serrage de pièce déplaçable dans la direction de la pièce X_{A} étant monté à rotation avec l'outil (2), comme variante à la rotation (D)_{N}, pour un fraisage, en vue du guidage (S) d'un tranchant rotatif sur la zone d'usinage selon un angle, par pivotement oscillant ou de manière similaire.
